(19)

Europäisches
Patentamt
European
Patent Office
Office européen
des brevets

(11)     **EP 2 244 188 B1**

(12)                    **EUROPEAN PATENT SPECIFICATION**

(45) Date of publication and mention
of the grant of the patent:
**20.12.2017   Bulletin 2017/51**

(51) Int Cl.:
*G06F 11/14* *(2006.01)*      *B61L 25/00* *(2006.01)*

(21) Application number: **09005800.9**

(22) Date of filing: **25.04.2009**

(54) **Method for verifying correct data transfer to a video memory**

Verfahren zur Überprüfung der korrekten Datenübertragung auf einen Videospeicher

Procédé de vérification de transfert de données correct vers une mémoire vidéo

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**BA RS**

(43) Date of publication of application:
**27.10.2010   Bulletin 2010/43**

(73) Proprietor: **Thales Management & Services
Deutschland GmbH
71254 Ditzingen (DE)**

(72) Inventor: **Schäfer, Michael, Dr.
70806 Kornwestheim (DE)**

(74) Representative: **Kohler Schmid Möbus
Patentanwälte
Partnerschaftsgesellschaft mbB
Gropiusplatz 10
70563 Stuttgart (DE)**

(56) References cited:
**EP-A- 0 443 377        EP-A- 0 584 895
EP-A- 0 856 792        EP-A- 1 050 815
WO-A-2007/033902    DE-A1- 3 411 015
FR-A- 2 908 225**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention

The invention relates to a method for verifying correct transfer of bitmap data from a first memory, in particular a main memory of a computer system, to a second memory of a computer system, in particular a video memory of a graphic card. The invention also relates to a computer program product for implementing the method, and to a corresponding computer system.

Typical HMI (Human Machine Interface) applications for visualizing the state of safety-critical data, e.g. of Railway Control Systems, (vital visualization) generally generate their images in the form of bitmaps in the computer's main memory. These bitmaps are subsequently transferred from the main memory to the video memory, e.g. of a graphic card in order to display the bitmap data on a graphical display such as a monitor or the like. In such safety-related visualization applications, the bitmap image stored in the video memory must be identical to the original one in main memory, thus requiring a verification procedure to check the identity of both bitmap images.

In existing safety-related visualization systems (as realized e.g. in the products BO L ISA, Command 900, SOC/VCC of Thales Rail Signalling Solutions GmbH or in the product BPS901 of Siemens) the complete bitmap image is transferred back into main memory. Afterwards, a check code (e.g. a CRC (Cyclic Redundancy Check) code) is calculated from this data. Finally, this check code is compared with a check code calculated from the original image in the main memory to verify if the transfer of the bitmap data has been performed correctly.

However, in recent years, the amount of memory which is provided for graphical displays has dramatically increased due to e.g. the increase of the number of monitors per workstation, of the resolution of the monitors and of the number of colours to display. The time required for performing a check in the way described above in such systems may be in the range of seconds. However, interrupting normal operation over such a long time period typically is not acceptable for an operator. Moreover, modern graphic cards which allow the usage of transparent colours may fail when performing the check described above.

EP 0443377 A2 discloses an apparatus for fail-safe displaying of a signalling picture on a screen. To form a check code, picture data which is entered into a frame refresh buffer is entered in parallel to a further, similar buffer which is not followed by a screen, the picture data being immediately subsequently read out of the further buffer to a check code generator. A check code generated by the check code generator is then compared with a correspondence in a control processor, an error being indicated if there is no correspondence.

DE 3411015 A1 discloses a method for failsafe representation of a mimic diagram on a data display device in which the image data supplied to the data display device are continuously checked by the fact that a test code is formed by data reduction from the image data stream and this code is compared with a reference code previously stored and characteristic of the mimic diagram to be displayed. The reference code is formed by modulo-2 addition from a basic code representing the static picture elements and the change codes corresponding to the individual mimic diagram changes.

EP 0856792 A2 discloses a method for safe display of an image on a monitor. The method involves feeding information to an image processing computer which generates a first image being stored in a first image memory. Using an image retrieval memory, the image is then displayed on the monitor. The image processing computer also generates a second image from the information, being stored in a second memory. The content of the image retrieval memory is then at least partly compared with the content of the first image memory and independently of that, it is compared with the content of the second image memory.

EP 0584895 A2 relates to a fail-safe displaying method of traffic technical information, wherein data relating to the operating states of individual components of a Railway Control System are output by an operating control device, in particular by an interlocking cabin. Elements are assigned to symbols composed respectively of individual pixels, the pixels of a symbol being in each case assigned the same colour values in accordance with the operating state-specific, current data for the corresponding element. In a test routine, the colour value of a selected pixel of a symbol to be tested is read out and compared with the item of data for the respective element and in the event of non-identity a fault report is generated.

FR 2908225 A discloses a method which involves verifying the integrity of an image displayed by a control of digital video signals transmitted between a logical processing unit and a display device. A binary control code is generated, and computer code bits of colors of an image pixel are substituted by the bits of the corresponding binary code using the processing unit. The binary code or stimulation and/or control point are read by a control device to verify its coherence and the image integrity.

Object of the Invention

It is an object of the invention to provide: a reliable and fast method for verifying the transfer of bitmap data from a first to a second memory.

Summary of the Invention

This object is achieved by a method according to claim 1, a computer program according to claim 8 and a computer system according to claim 9.

The inventive method comprises: a) modifying at least one property of a number of pixels selected from the bitmap data of the first memory, the selection being performed in a random way, b) transferring the bitmap data comprising the modified pixels from the first memory to the second memory, c) reading back the modified pixels from the second memory, and d) comparing the read-back modified pixels to the modified pixels of the first memory for verifying the correct transfer of the bitmap data, wherein the at least one property is modified in such a way that the modification is not observable when displaying the modified pixels on the graphical display mentioned above. For checking the correct copying of the bitmap data of a whole image or of a portion thereof from the first to the second memory, it may be sufficient to check if a (typically small) number of pixels selected from the transferred bitmap data has been copied correctly by reading back only those selected pixels. However, in the present applications of visualizing safety-critical data, in particular for Railway Control Systems, the displayed images typically comprise large image areas having the same colour. Thus, when simply reading back a small number of pixels from the transferred data, there is a considerable risk that the read-back pixels have the same property as the original pixels, even though the transfer of data has been performed incorrectly, e.g. by copying the bitmap data to an incorrect position or with an erroneous scaling to the second memory. In such a case, due to the high number of pixels having identical properties, the check of the read-back bitmap data may indicate that the bitmap data has been transferred correctly, even in cases when the transfer was incorrect.

The inventor therefore proposes to modify at least one property of the pixels which are to be read-back before transferring them to the second memory. In such a way, the read-back pixels may serve as "fingerprint pixels" of the bitmap data which is transferred to the second memory, thus allowing to detect the copying of bitmap data to wrong positions and/or to a wrongly scaled area of the second memory.

For avoiding systematic errors which may occur when pixels are selected always at the same positions of the image in the first memory, it is advantageous to randomly select the "fingerprint" pixels in the first memory. In particular, when copying only parts of the image from the first to the second memory, the randomly selected "fingerprint" pixels allow for a unique identification of the respective copied parts of the image.

In one variant, the method further comprises reading back a number of unchanged pixels from the second memory, and comparing the read-back unchanged pixels to corresponding unchanged pixels in the first memory for verifying the correct transfer of the bitmap data. In addition to the modified pixels, a number of unchanged pixels may also be read back and compared to the respective pixels in the first memory. It is possible to randomly select the unchanged pixels from the bitmap data of the first memory, however, it is also possible to use a number of unchanged pixels having a pre-defined position in the area of the copied bitmap data, the pre-defined position e.g. depending on the type of a graphical symbol which is covered by the bitmap data, the graphical symbol being typically correlated with an operating state of an element (e.g. a railway signal) controlled by a railway control system. It will be understood, however, that software and/or hardware components which are involved in the process of copying the bitmap data from the first to the second memory in general do not have any information which parts of the image contain graphical information and which do not, i.e. these components are adapted to treat every pixel of the bitmap data equally.

In one variant, the modified property is selected from the group consisting of: a color value of the pixels, in particular a primary color value of the pixels, and a transparency value of the pixels. In general, each pixel of a bitmap is represented by at least three, typically by four numerical values: One value for each basic colour, e.g. red, green and blue. The fourth value is the so-called alpha value being a measure for the transparency of a pixel. The alpha value and the values for red, green and blue are numerical values which typically vary in a range between 0 and 1. Considering the alpha value, the resulting red, green and blue values in video memory typically are:

$$(\text{Red, Green, Blue})_{\text{video memory. new}} =$$
$$(\text{Red, Green, Blue}) \bullet \alpha + (\text{Red, Green, Blue})_{\text{video memory, existing}} \bullet (1 - \alpha) \; .$$

Typically, the at least one property is modified in such a way that the modification will not be observed by an operator when displaying the modified pixels on a graphical display, i.e. only marginal modifications are performed on the at least one property of the pixels. Regarding the colour values, typically a change of less than 5%, preferably of less than 1 % for each of the absolute values will not be recognized / visible by an operator using the graphical display. Regarding the alpha value, a modification of less than 10%, preferably of less than 5 % (or of less than 0.1, resp. less than 0.05 in absolute values) will not be visible to the operator.

In one variant, the method further comprises: grouping the bitmap data of the first memory into a plurality of image areas having a pre-defined size, and performing at least steps a) individually for each of the image areas. When splitting up the total image into a number of image areas with pre-defined size, e.g. with 32 x 32 pixels, within each area, a fixed number of randomly selected pixels may be used as "fingerprint" pixels. In this variant, the total number of pixels in the image area of pre-defined size is typically more that 50 times, preferably more than 100 times larger than the number of modified pixels in the image area. In the above example with an area size of 32 x 32 = 1024 pixels, the number of modified pixels may be e.g. 10 or 5 pixels, thus allowing to reduce the time for performing the check considerably - by at least one magnitude in the above example - as compared to reading back all the pixels of the image area.

In a further variant, the method further comprises: using a number of mock modified pixels for performing the comparison in order to verify the correct function of the comparison. From time to time, e.g. in periodic intervals, an additional check of the comparator function may be provided against mock, i.e. wrong, fingerprint data as a sample. Such an additional check reveals faults of the comparison function that would lead to a successful comparison even if wrong bitmap data is displayed.

In another variant, the result of the comparison of the modified and/or unmodified pixels can be visualized on a graphical display in the context of a fail-safe visualization system, e.g. indicating a safety state for the operator.

The invention also relates to a computer program product adapted to perform all the steps of the method according to any one of the preceding claims. The computer program product may be implemented in a suitable software or hardware, in particular a field programmable gate array (FPGA) or an application-specific integrated circuit (ASIC).

A further aspect is related to a computer system, in particular to a workstation, comprising: a first memory, in particular a main memory, the first memory storing bitmap data comprising pixels to be displayed on a graphical display, and a second memory, in particular a video memory, a modifying unit for modifying at least one property of a fixed number of pixels selected from bitmap data in the first memory, the selection being performed in a random way, a transfer unit adapted to transfer the bitmap data comprising the modified pixels from the first memory to the second memory and for reading back at least the modified pixels from the second memory, and a comparator unit for comparing the read-back modified pixels to the modified pixels of the first memory for verifying the correct transfer of the bitmap data, wherein the modifying unit is adapted to modify the at least one property in such a way that the modification is not observable when displaying the modified pixels on the graphical display. Using such a system allows for a fail-safe display of safety-critical data, in particular related to railway control systems.

In further embodiments, the transfer unit is adapted for reading back a number of unchanged pixels from the second memory, and the comparator unit is adapted for comparing the read-back unchanged pixels to corresponding unchanged pixels in the first memory for verifying the correct transfer of the bitmap data, and/or the modifying unit is adapted to modify a property which is selected from the group consisting of: a color value of the pixels, in particular a primary color value of the pixels, and a transparency value of the pixels.

The computer system may also comprise a graphical display for displaying the bitmap data of the second memory, preferably also indicating the result of the comparison of the bitmap data as a state information / warning to the operator. It will be understood that the comparator unit, the transfer unit, and the modifying unit may be implemented as suitable software or hardware of the computer system, for example in the form of an ASIC or FPGA.

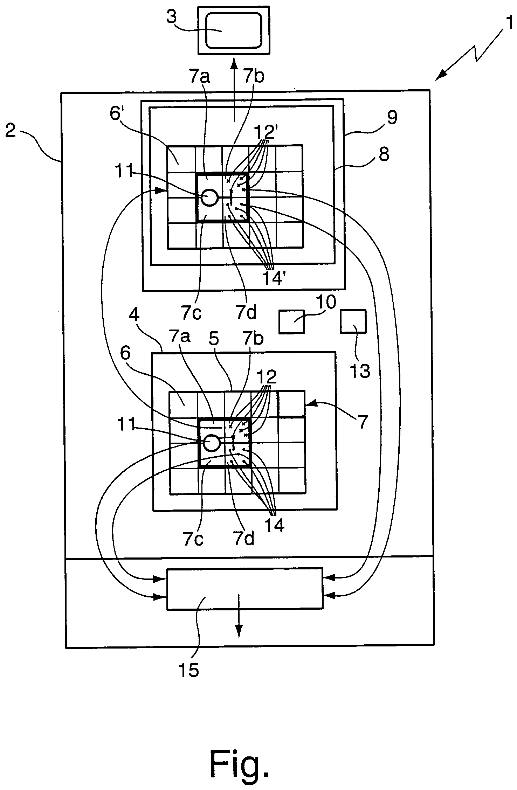

Further features and advantages are stated in the following description of exemplary embodiments, with reference to the figures of the drawing, which shows significant details, and are defined by the claims. The individual features can be implemented individually by themselves, or several of them can be implemented in any desired combination.

Brief Description of the Drawings

Exemplary embodiments are shown in the diagrammatic drawing and are explained in the description below. The following are shown:

**Fig.**  the only figure shows a schematic diagram of an embodiment of a computer system according to the invention being adapted for fail-safe displaying of safety-critical data.

Detailed Description of Preferred Embodiments

The **Figure** shows a computer system **1** which comprises a workstation **2** and a graphical display **3**, e.g. a monitor, being connected to the workstation 2. It will be understood that the graphical display 3 may be connected to the workstation 2 via a cable or a wireless connection, and that instead of a monitor, other types of graphical displays may be used.

The workstation 2 comprises a first (main) memory **4**, i.e. a memory which is provided e.g. on the main board of the workstation 4, the first memory 4 being used for storing data of different types such as computer programs run on the workstation 2. A specific range **5** of the first memory 4 is reserved for the storage of bitmap data **6**, the range 5 being sub-divided into image areas **7** of pre-defined size, e.g. having 32 x 32 or 64 x 64 pixels each. The bitmap data 6 can be transferred from the main memory 4 to a second (video) memory **8** of a graphic card **9**, the graphic card 9 being typically exclusively used for storing bitmap data 5 to be displayed on the graphical display 3. A transfer unit **10**, e.g. a field bus and/or other soft- or hardware component(s) is/are provided in the workstation 2 for performing a data transfer between the different components of the workstation 2, for example for transferring the bitmap data 6 from the first memory 4 to the second memory 8.

For displaying a state change of safety-critical data, e.g. of graphical symbols **11** representing different operation states of elements such as railway signals controlled by a Railway Control System / Interlocking (not shown), the following process may be performed:

First, the graphical symbol 11 is re-drawn in its new state (e.g. in red instead of green) in the first memory 4 by changing a property of the pixels which constitute the graphical symbol 11. Typically, in both memories 4, 8, each pixel is represented by three (primary) colour values, e.g. red, green, and blue, and by a fourth value, the so-called alpha-value, indicative of the transparency of the pixels. Pixels are modified by a modification unit **13** which may be implemented in the form of a suitable software or hardware component. It will be understood that a representation of the pixels in the first, resp. in the second memory 4, 8 using less or more than four properties per pixel is possible as well.

After the modification, the image areas 7a to 7d which are partially covered by the graphical symbol 11 have to be copied to the video memory 8 of the graphic card 9. However, before the transmission to the video memory 8 takes place, each image area 7a to 7d receives an individual fingerprint, as follows:

Within each image area 7a to 7d, a fixed number of e.g. five pixels **12** (shown exemplarily for the image area 7b, is selected randomly. For each of the five pixels, at least one property (colour value and/or transparency value) is changed marginally in such a way that an operator watching the graphical display 3 will not be able to see any difference between the representation with and without the modified pixels 12. For this purpose, the colour values / the alpha value may be changed by less than 1%, preferably by less than 0.5 %, or the absolute value may be changed by less than 0.01, resp. less than 0.05.

After the transfer of the image areas 7a to 7d from the main memory 4 to the video memory 8, the transfer unit 10 is used for reading back the pixel values of the modified "fingerprint" pixels 12' of each of the image areas 7a to 7d in the video memory 8 to a comparator unit **15**. The transfer unit 10 also provides the fingerprint pixels 12 in the first memory 4 to the comparator unit 15 for comparing them to the read-back pixels 12' of each image area 7a to 7d. The result of the comparison is typically a binary value indicating whether or not the comparison has been successful, i.e. indicating that the fingerprint pixels 12, 12' of the first and second memory 4, 8 are identical or not.

The modification of the "fingerprint" pixels 12 before copying the image areas 7a to 7d from the first 4 to the second memory 8 is done for the following reason: Within each image area, the pixels in sub-areas which are covered with graphical symbols and the pixels within non-covered sub-areas, respectively, typically have identical properties, in particular identical colour. Thus, when simply reading back a small number of pixels from the transferred data, there is a considerable risk that the read-back pixels have the same property as the original pixels, even though the transfer of data has been performed incorrectly.

In addition, for control purposes, unmodified reference pixels **14** in the image areas 7a to 7d of the first memory 4 (in the present example, five per area) are compared to corresponding unmodified reference pixels 14' in the second memory 8. The position of the unmodified pixels 14 in the image areas 7a to 7d may be randomly selected, however, it is also possible to use pre-defined patterns, selecting the position of the reference pixels 14 within the image areas 7a to 7d e.g. in dependence of the graphical symbol 11 which (partially) covers the respective image area 7a to 7d. It will be understood that the number of reference pixels 14 does not necessarily coincide with the number of modified pixels 12.

The result of both comparisons (modified / unmodified pixels) can be used in the context of a failure-safe visualization system, e.g. for displaying the current result of the comparison on the graphical display 3 as an indicator of the present safety state of the visualization.

The person skilled in the art will appreciate that instead of comparing the values of the modified / reference pixels 12, 14 of the image areas 7a to 7d which have been copied from the main memory 4 to the video memory 8 only, the modified / reference pixels 12, 14 of all the image areas 7 in the range 5 may be compared during each change of the operation state of a graphical symbol 11 for increasing the safety level of the visualization.

Also, the correct function of the comparator unit 15 can be checked on a cyclic basis against wrong fingerprint data which may be provided as a sample to the comparison unit 15 instead of the read-back fingerprint pixels. This check allows to reveal faults in the comparison function that would lead to a successful comparison, even though wrong data is displayed on the graphical display 3.

Typically, the total number of pixels in each of the image areas 7 is more that 50 times, in particular more than 100 times larger than the number of modified / reference pixels 12, 14 within each image area 7. Thus, the process of comparing the modified / reference pixels 12', 14' of the copied image with the modified / reference pixels 12, 14 of the original image is typically a magnitude faster than the comparison of the entire copied image data.

The process and system described above do only require one feature of the graphic card 9, namely to transfer single pixel values from the video memory 8 back to the main memory 4. As they do not depend on any other special features of the graphic card 9, in general no modifications are required when changing the latter. The person skilled in the art will appreciate that although the above description has been given for the example of bitmap data for a railway control system, the processes and systems described herein may equally well be applied to other kinds of data, for example data used in air traffic or marine applications.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

**Claims**

1. Method for verifying correct transfer of bitmap data (6) from a first memory, in particular a main memory (4), to a second memory, in particular a video memory (8), in order to display the bitmap data (6) comprising pixels (12, 12') on a graphical display (3), the method comprising:

   a) modifying at least one property of a fixed number of pixels (12) selected from the bitmap data (6) in the first memory (4), the selection being performed in a random way,
   b) transferring the bitmap data (6) comprising the modified pixels (12) from the first memory (4) to the second memory (8),
   c) reading back the modified pixels (12') from the second memory (8), and
   d) comparing the read-back modified pixels (12') to the modified pixels (12) of the first memory (4) for verifying the correct transfer of the bitmap data (6, 6'), wherein the at least one property is modified in such a way that the modification is not observable when displaying the modified pixels (12') on the graphical display (3).

2. Method according to claim 1, further comprising:

   reading back a number of unchanged pixels (14') from the second memory (8), and comparing the read-back unchanged pixels (14') to corresponding unchanged pixels (14) in the first memory (4) for verifying the correct transfer of the bitmap data (6, 6').

3. Method according to claim 1 or 2, wherein the modified property is selected from the group consisting of: a color value of the pixels, in particular a primary color value of the pixels, and a transparency value of the pixels.

4. Method according to any one of the preceding claims, further comprising:

   grouping the bitmap data (6) of the first memory (4) into a plurality of image areas (7, 7a-7d) having a pre-defined size, and performing at least step a) individually for each of the image areas (7, 7a-7d).

5. Method according to claim 4, wherein the total number of pixels in the image area (7, 7a-d) of pre-defined size is more that 50 times, preferably more than 100 times larger than the number of modified pixels (12, 12') in the image area (7, 7a-d).

6. Method according to any one of the preceding claims, further comprising:

   using a number of mock modified pixels for performing the comparison in order to verify the correct function of the comparison.

7. Method according to any one of the preceding claims, further comprising:

   visualizing the result of the comparison on a graphical display (3).

8. Computer program product adapted to perform all the steps of the method according to any one of the preceding claims.

9. A computer system (1, 2), comprising:

a first memory, in particular a main memory (4), the first memory storing bitmap data (6) comprising pixels (12, 12') to be displayed on a graphical display (3),
a second memory, in particular a video memory (8),
a modifying unit (13) for modifying at least one property of a fixed number of pixels (12) selected from bitmap data (6) in the first memory (4), the selection being performed in a random way,
a transfer unit (10) adapted to transfer the bitmap data (6) comprising the modified pixels (12) from the first memory (4) to the second memory (8) and for reading back at least the modified pixels (12') from the second memory (8), and
a comparator unit (15) for comparing the read-back modified pixels (12') to the modified pixels (12) of the first memory (4) for verifying the correct transfer of the bitmap data (6), wherein the modifying unit (13) is adapted to modify the at least one property in such a way that the modification is not observable when displaying the modified pixels (12') on the graphical display (3).

10. Computer system according to claim 9, wherein the transfer unit (10) is adapted for reading back a number of unchanged pixels (14') from the second memory (8), and the comparator unit (15) is adapted for comparing the read-back unchanged pixels (14') to corresponding unchanged pixels (14) in the first memory (4) for verifying the correct transfer of the bitmap data (6).

11. Computer system according to claim 9 or 10, wherein the modifying unit (13) is adapted to modify a property which is selected from the group consisting of: a color value of the pixels, in particular a primary color value of the pixels, and a transparency value of the pixels.

12. Computer system according to any one of claims 9 to 11, further comprising a graphical display (3) for displaying the bitmap data (6) of the second memory (8).

**Patentansprüche**

1. Verfahren zum Verifizieren der korrekten Übertragung von Bitmap-Daten (6) von einem ersten Speicher, insbesondere einem Hauptspeicher (4), zu einem zweiten Speicher, insbesondere einem Videospeicher (8), um die Pixel (12, 12') aufweisenden Bitmap-Daten (6) an einer graphischen Anzeige (3) anzuzeigen, wobei das Verfahren aufweist:

a) Modifizieren mindestens einer Eigenschaft einer festen Anzahl von Pixeln (12), ausgewählt aus den Bitmap-Daten (6) in dem ersten Speicher (4), wobei die Auswahl willkürlich erfolgt,
b) Übertragen der die modifizierten Pixel (12) aufweisenden Bitmap-Daten (6) von dem ersten Speicher (4) an den zweiten Speicher (8),
c) Zurücklesen der modifizierten Pixel (12') aus dem zweiten Speicher (8), und
d) Vergleichen der zurückgelesenen modifizierten Pixel (12') mit den modifizierten Pixeln (12) des ersten Speichers (4) zum Verifizieren der korrekten Übertragung der Bitmap-Daten (6, 6'), wobei die mindestens eine Eigenschaft so modifiziert ist, dass die Modifikation nicht sichtbar ist, wenn die modifizierten Pixel (12') an der graphischen Anzeige (3) angezeigt werden.

2. Verfahren nach Anspruch 1, weiterhin umfassend:

Zurücklesen einer Anzahl von unveränderten Pixeln (14') aus dem zweiten Speicher (8) und Vergleichen der zurückgelesenen unveränderten Pixel (14') mit entsprechenden unveränderten Pixeln (14) in dem ersten Speicher (4) zum Verifizieren der korrekten Übertragung der Bitmap-Daten (6, 6').

3. Verfahren nach Anspruch 1 oder 2, wobei die modifizierte Eigenschaft ausgewählt ist aus der Gruppe bestehend aus: einem Farbwert der Pixel, insbesondere einem Primärfarbwert der Pixel, und einem Transparenzwert der Pixel.

4. Verfahren nach einem der vorhergehenden Ansprüche, weiterhin umfassend: Gruppieren der Bitmap-Daten (6) des ersten Speichers (4) in eine Vielzahl von Bildbereichen (7, 7a-7d), die eine vorbestimmte Größe haben, und Ausführen von zumindest Schritt a) einzeln für jeden der Bildbereiche (7, 7a-7d).

5. Verfahren nach Anspruch 4, wobei die gesamte Anzahl von Pixeln in dem Bildbereich (7, 7a-d) von vorbestimmter Größe mehr als 50 mal, vorzugsweise mehr als 100 mal, größer ist als die Anzahl von modifizierten Pixeln (12, 12') in dem Bildbereich (7, 7a-d).

6. Verfahren nach einem der vorhergehenden Ansprüche, weiterhin umfassend: Verwenden einer Anzahl von probeweise modifizierten Pixeln zum Ausführen des Vergleichs, um die korrekte Funktion des Vergleichs zu verifizieren.

7. Verfahren nach einem der vorhergehenden Ansprüche, weiterhin umfassend: Visualisieren des Ergebnisses des Vergleichs an einer graphischen Anzeige (3).

8. Computerprogrammprodukt, eingerichtet zum Ausführen aller Schritte des Verfahrens nach einem der vorhergehenden Ansprüche.

9. Computersystem (1, 2) umfassend:

einen ersten Speicher, insbesondere einen Hauptspeicher (4), wobei der erste Speicher Pixel (12, 12') aufweisende Bitmap-Daten (6) speichert, die an einer graphischen Anzeige (3) angezeigt werden sollen,
einen zweiten Speicher, insbesondere einen Videospeicher (8),
eine Modifizierungseinheit (13) zum Modifizieren mindestens einer Eigenschaft einer festen Anzahl von Pixeln (12), ausgewählt aus Bitmap-Daten (6) in dem ersten Speicher (4), wobei die Auswahl willkürlich erfolgt,
eine Übertragungseinheit (10), die dazu eingerichtet ist, die modifizierte Pixel (12) aufweisenden Bitmap-Daten (6) von dem ersten Speicher (4) an den zweiten Speicher (8) zu übertragen und zumindest die modifizierten Pixel (12') aus dem zweiten Speicher (8) zurückzulesen, und
eine Vergleichseinheit (15) zum Vergleichen der zurückgelesenen modifizierten Pixel (12') mit den modifizierten Pixeln (12) des ersten Speichers (4) zum Verifizieren der korrekten Übertragung der Bitmap-Daten (6), wobei die Modifikationseinheit (13) dazu eingerichtet ist, die mindestens eine Eigenschaft so zu modifizieren, dass die Modifikation nicht sichtbar ist, wenn die modifizierten Pixel (12') an der graphischen Anzeige (3) angezeigt werden.

10. Computersystem nach Anspruch 9, wobei die Übertragungseinheit (10) dazu eingerichtet ist, eine Anzahl von unveränderten Pixeln (14') aus dem zweiten Speicher (8) zurückzulesen und die Vergleichseinheit (15) dazu eingerichtet ist, die zurückgelesenen unveränderten Pixel (14') mit entsprechenden unveränderten Pixeln (14) in dem ersten Speicher (4) zu vergleichen zum Verifizieren der korrekten Übertragung der Bitmap-Daten (6).

11. Computersystem nach Anspruch 9 oder 10, wobei die Modifikationseinheit (13) dazu eingerichtet ist, eine Eigenschaft zu modifizieren, die ausgewählt ist aus der Gruppe bestehend aus: einem Farbwert der Pixel, insbesondere einem Primärfarbwert der Pixel, und einem Transparenzwert der Pixel.

12. Computersystem nach einem der Ansprüche 9 bis 11, weiterhin umfassend eine graphische Anzeige (3) zum Anzeigen der Bitmap-Daten (6) des zweiten Speichers (8).

**Revendications**

1. Procédé pour vérifier un transfert correct de données de topogramme binaire (6) depuis une première mémoire, en particulier une mémoire principale (4), jusqu'à une seconde mémoire, en particulier une mémoire vidéo (8), afin d'afficher les données de topogramme binaire (6) comprenant des pixels (12, 12') sur un affichage graphique (3), le procédé comprenant :

a) la modification d'au moins une propriété d'un nombre fixe de pixels (12) qui sont sélectionnés parmi les données de topogramme binaire (6) dans la première mémoire (4), la sélection étant effectuée d'une manière aléatoire ;
b) le transfert des données de topogramme binaire (6) comprenant les pixels modifiés (12) depuis la première mémoire (4) jusqu'à la seconde mémoire (8) ;
c) la relecture des pixels modifiés (12') à partir de la seconde mémoire (8) ; et

d) la comparaison des pixels modifiés relus (12') avec les pixels modifiés (12) de la première mémoire (4) pour vérifier le transfert correct des données de topogramme binaire (6, 6'), dans lequel l'au moins une propriété est modifiée de telle sorte que la modification ne puisse pas être observée lors de l'affichage des pixels modifiés (12') sur l'affichage graphique (3).

**2.** Procédé selon la revendication 1, comprenant en outre :

la relecture d'un certain nombre de pixels inchangés (14') à partir de la seconde mémoire (8), et la comparaison des pixels inchangés relus (14') avec des pixels inchangés correspondants (14) dans la première mémoire (4) pour vérifier le transfert correct des données de topogramme binaire (6, 6').

**3.** Procédé selon la revendication 1 ou 2, dans lequel la propriété modifiée est sélectionnée parmi le groupe qui est constitué par : une valeur de couleur des pixels, en particulier une valeur de couleur primaire des pixels, et une valeur de transparence des pixels.

**4.** Procédé selon l'une quelconque des revendications précédentes, comprenant en outre :

le groupage des données de topogramme binaire (6) de la première mémoire (4) selon une pluralité de zones d'image (7, 7a - 7d) présentant une dimension prédéfinie, et la réalisation d'au moins l'étape a) de manière individuelle pour chacune des zones d'image (7, 7a - 7d).

**5.** Procédé selon la revendication 4, dans lequel le nombre total de pixels dans la zone d'image (7, 7a - 7d) de dimension prédéfinie est plus de 50 fois, de préférence plus de 100 fois, plus grand que le nombre de pixels modifiés (12, 12') dans la zone d'image (7, 7a - 7d).

**6.** Procédé selon l'une quelconque des revendications précédentes, comprenant en outre :

l'utilisation d'un certain nombre de pixels modifiés fictifs pour effectuer la comparaison afin de vérifier la fonction correcte de la comparaison.

**7.** Procédé selon l'une quelconque des revendications précédentes, comprenant en outre :

la visualisation du résultat de la comparaison sur un affichage graphique (3).

**8.** Produit programme d'ordinateur adapté pour réaliser toutes les étapes du procédé selon l'une quelconque des revendications précédentes.

**9.** Système informatique (1, 2), comprenant :

une première mémoire, en particulier une mémoire principale (4), la première mémoire stockant des données de topogramme binaire (6) comprenant des pixels (12, 12') destinés à être affichés sur un affichage graphique (3) ;
une seconde mémoire, en particulier une mémoire vidéo (8) ;
une unité de modification (13) pour modifier au moins une propriété d'un nombre fixe de pixels (12) qui sont sélectionnés à partir des données de topogramme binaire (6) dans la première mémoire (4), la sélection étant effectuée d'une manière aléatoire ;
une unité de transfert (10) qui est adaptée de manière à transférer les données de topogramme binaire (6) comprenant les pixels modifiés (12) depuis la première mémoire (4) jusqu'à la seconde mémoire (8) et de manière à relire au moins les pixels modifiés (12') à partir de la seconde mémoire (8) ; et
une unité de comparateur (15) pour comparer les pixels modifiés relus (12') avec les pixels modifiés (12) de la première mémoire (4) pour vérifier le transfert correct des données de topogramme binaire (6), dans lequel l'unité de modification (13) est adaptée de manière à modifier l'au moins une propriété de telle sorte que la modification ne puisse pas être observée lors de l'affichage des pixels modifiés (12') sur l'affichage graphique (3).

**10.** Système informatique selon la revendication 9, dans lequel l'unité de transfert (10) est adaptée de manière à relire un certain nombre de pixels inchangés (14') à partir de la seconde mémoire (8), et l'unité de comparateur (15) est adaptée de manière à comparer les pixels inchangés relus (14') avec des pixels inchangés correspondants (14) dans la première mémoire (4) pour vérifier le transfert correct des données de topogramme binaire (6).

**11.** Système informatique selon la revendication 9 ou 10, dans lequel l'unité de modification (13) est adaptée de manière à modifier une propriété qui est sélectionnée parmi le groupe qui est constitué par : une valeur de couleur des pixels, en particulier une valeur de couleur primaire des pixels, et une valeur de transparence des pixels.

**12.** Système informatique selon l'une quelconque des revendications 9 à 11, comprenant en outre un affichage graphique (3) pour afficher les données de topogramme binaire (6) de la seconde mémoire (8).

Fig.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0443377 A2
- DE 3411015 A1
- EP 0856792 A2
- EP 0584895 A2
- FR 2908225 A